# EUROPÄISCHE PATENTSCHRIFT

(11) **EP 4 666 044 B1**
(45) Veröffentlichungstag und Bekanntmachung des Hinweises auf die Patenterteilung: **20.05.2026**
(21) Anmeldenummer: 24712443.1
(22) Anmeldetag: 15.03.2024
(51) Int. Cl.: G01L 11/02, G01L 9/00, G01B 11/24

(54) **DRUCKSENSOR MIT EINER SENSORELEKTRONIK SOWIE EIN VERFAHREN**
PRESSURE SENSOR HAVING SENSOR ELECTRONICS, AND A METHOD
CAPTEUR DE PRESSION DOTÉ D'UN SYSTÈME ÉLECTRONIQUE DE CAPTEUR ET PROCÉDÉ

(30) Priorität: 17.03.2023 DE 102023106769
(43) Veröffentlichungstag der Anmeldung: 24.12.2025
(73) Patentinhaber: ifm electronic gmbh, 45128 Essen (DE)
(72) Erfinder: MÜLLER, Rolf, 88276 Berg (DE); KNOLL, Guido, 88239 Wangen (DE); MÜLLER, Hans-Peter, 88273 Fronreute (DE); GERLACH, Philipp, 89081 Ulm (DE); DONATH, Benjamin, 88213 Ravensburg (DE)
(74) Vertreter: Ifm Patentabteilung
(86) Internationale Anmeldenummer: PCT/EP2024/056945
(87) Internationale Veröffentlichungsnummer: WO 2024/194180

(56) Entgegenhaltungen:
- EP-B1- 0 157 606
- CN-A- 108 562 239
- DE-A1- 102011 077 499
- US-B1- 6 341 526

## Beschreibung

Die Erfindung betrifft ein Drucksensor mit einer Sensorelektronik, insbesondere für die Automatisierungstechnik, gemäß dem Oberbegriff des Anspruchs 1. Weiter betrifft die Erfindung auch ein Verfahren zum Betrieb des Drucksensors.

Gattungsgemäße Drucksensoren können mit einem Sensorgehäuse und einer darin angeordneten druckabhängig auslenkbare Membran an Druckrohre oder Druckbehälter angeschlossen werden, um einen Mess-Druckwert eines auf die Membran wirkenden Fluids zu bestimmen. Dabei sind unterschiedliche Messprinzipien bekannt, um anhand einer Membranauslenkung den Mess-Druckwert zu erfassen. Beispielsweise kann die Membranauslenkung kapazitiv erfasst werden, wobei elektronische Messelemente unmittelbar angrenzend an die Membran erforderlich sind. Weiter kann die Auslenkung der Membran auch optisch mittels eines Michelson Interferometers bestimmt werden, wobei eine Laserstrahlung mittels optischer Elemente in einen Messstrahl und einen Referenzstrahl aufgeteilt und an einem Photodetektor als überlagerte druckabhängige Interferenz-Signale erfasst werden. Die zusätzliche Verwendung von optischen Bauteilen, wie Strahlenteilern und/oder Linsen hat jedoch den Nachteil, dass diese einen großen Montagebauraum verbrauchen, hoch präzise Anordnungen benötigen und zudem für raue Industrieumgebungen vor Beschädigung geschützt werden müssen. Weiter sind Drucksensoren mit optischen und/oder elektronischen Bauteilen unmittelbar angrenzend an die Membran nurmehr begrenzt für Hochtemperatur-Anwendungen geeignet.

Eine weiterer optischer Drucksensor ist aus der US 6 341 526 B1 bekannt, wobei zur Bestimmung eines Druckwerts eine Auslenkung einer Membran innerhalb einer Druckkammer des Drucksensors gemessen wird. Dabei weist der Drucksensor einen Diodenlaser mit einer Lichtleitfaser auf, der die Membran an vorbestimmten Messabschnitten beleuchtet. Oberhalb der Membran ist mit einem vorbestimmten Abstand ein Beugungsgitter aus Silizium mit einer Vielzahl Gitterlinien angeordnet, wobei scheinbar spekular reflektierte Lichtstrahlen der Membran und des Beugungsgitters miteinander interferieren. Zwei weitere Lichtleitfasern werden auf spezifische Ordnungen des Beugungsgitters ausgerichtet, um ein Interferenz-Intensitätssignal an zwei vordefinierten Messpositionen einem Photodetektor zu übertragen. Aus einem Vergleich der Interferenz-Intensitätssignale der zwei Messpositionen kann nachfolgend die Auslenkung der Membran bestimmt werden. Die Membran und das Beugungsgitter sind mittels Mikrobearbeitungstechnik, insbesondere aus Silizium, hergestellt, die optisch glatte Oberfläche ausbilden können, um dadurch eine spekulare Reflektion zu ermöglichen.

Dabei hat es sich im Stand der Technik für optische Drucksensoren zusätzlich als nachteilig herausgestellt, dass mittels Mikrobearbeitungstechnik hergestellte Membranen für industrielle Anwendungen der Automatisierungstechnik aufgrund der wenig robusten Materialwahl nurmehr eingeschränkt geeignet sind. Insbesondere eine Membran aus Silizium mit geringer Festigkeit für Biegebeanspruchungen kann bei hohen Druckwerten, schlagartigen Beanspruchungen und/oder Vibrationen beschädigt werden, weshalb ein sicherer und zuverlässiger Betrieb für raue Industrieanwendungen nicht sichergestellt werden kann. Zudem ist die Mikrobearbeitung der Membran mit einem hohen Herstellungsaufwand verbunden. Außerdem kann sich ein Montageaufwand erhöhen, wenn die Lichtquelle und der Photodetektor nicht in einem gemeinsamen Sensorgehäuse angeordnet sind.

Die DE 10 2011 077 499 A1 zeigt eine Druckmesszelle, die aus einer Messmembran und einem zumindest teilweise transparenten Gegenkörper besteht. Diese sind unter Bildung einer Messkammer miteinander verbunden. Außerdem verfügt die Druckmesszelle über zwei parallele Reflexionsflächen. Der Abstand zwischen den Reflexionsflächen ist abhängig von der Differenz zwischen einem ersten und einem zweiten Druck, der außerhalb bzw. innerhalb der Messkammer herrscht.

Die EP 0 157 606 B1 offenbart einen Hochtemperaturdruckwandler mit einem Basisteil und einem Diaphragmateil aus geschmolzenem Kieselsäurematerial. Das Diaphragmateil lässt sich in Reaktion auf Veränderungen des ausgeübten Drucks durchbiegen und die Oberflächenebenheit eines Kontaktes zwischen Basisteil und Diaphragmateil beträgt etwa ein Zehntel der Wellenlänge von Licht.

Die CN 108 562 239 A zeigt eine Interferenzstreifen-Projektionsvorrichtung. Dabei wird das Licht einer Punktlichtquelle durch die Vorrichtung geführt. Die dadurch entstehenden Interferenzstreifen werden auf die Oberfläche eines zu prüfenden Objekts projiziert. Das reflektierte, verformte Streifenmuster wird von einer Industriekamera erfasst. Anschließend wird durch einen Phasenmessungs-Profilometrie-Algorithmus eine dreidimensionale Topographie des zu prüfenden

### Objekts wiederhergestellt.

Ein weiterer Drucksensor ist aus US 6 341 526 B1 bekannt.

Die Aufgabe der Erfindung ist es, einen Drucksensor vorzuschlagen, der bei Vermeidung der aus dem Stand der Technik bekannten Probleme einfacher herstellbar und montierbar ist, sowie einen zuverlässigeren Betrieb gewährleistet. Ferner besteht die Aufgabe darin ein Verfahren zum Betrieb eines Drucksensors anzugeben.

Die Aufgabe wird hinsichtlich des Drucksensors mit den Merkmalen des Anspruchs 1 gelöst und hinsichtlich des Verfahrens mit den Merkmalen des Anspruchs 10. Vorteilhafte Ausgestaltungen der Erfindung sind in den Unteransprüchen angegeben. Erfindungsgemäß wird ein Drucksensor, insbesondere für die Automatisierungstechnik, mit einer Sensorelektronik beansprucht, die eine Laserlichtquelle und eine Erfassungseinheit aufweist, um eine Membranoberfläche einer druckabhängig auslenkbaren Membran mit kohärentem Laserlicht zu bestrahlen oder zu beleuchten und reflektiertes Licht zu empfangen. Dabei sind die Sensorelektronik und die Membran in einem, vorzugsweise gemeinsamen Sensorgehäuse angeordnet, wobei die Laserlichtquelle das Laserlicht divergent ausstrahlt und die Erfassungseinheit als ein Bildsensor mit mehreren Pixeln ausgebildet ist, um das reflektierte Licht als ein druckabhängiges Interferenzmuster zu erfassen, und wobei der Drucksensor eine Auswerteeinheit mit Speichereinheit aufweist, die durch Vergleich eines Mess-Interferenzmusters mit mehreren gespeicherten Referenz-Interferenzmustern für mehrere Referenz-Druckwerte einen auf die Membran wirkenden Mess-Druckwert ermittelt.

Mit anderen Worten kann während des Betriebs des Drucksensors der Mess-Druckwert durch eine Art Ähnlichkeitsauswertung zwischen dem Mess-Interferenzmuster und den gespeicherten Referenz-Interferenzmustern ermittelt werden. Insbesondere kann durch den Vergleich ein dem Mess-Interferenzmuster ähnlichste oder am besten passendes Referenz-Interferenzmuster gefunden werden, um so einen Rückschluss auf einen aktuell am Drucksensor anliegenden Mess-Druckwert zu ermöglichen.

Dabei hat die Erfindung erkannt, dass das reflektierte Licht der divergent bestrahlten Membranoberfläche in Abhängigkeit einer Auslenkung und Druckbeanspruchung der Membran charakteristische und reproduzierbare Interferenzmuster am Bildsensor ausbilden. Für die Bestimmung des Mess-Druckwerts, zum Beispiel eines Fluids in einem Druckrohr oder Druckbehälter, sind nurmehr die gespeicherten Referenz-Interferenzmustern erforderlich, die bevorzugt einmalig in einem Einlernschritt bestimmt werden können. Spezielle optische Zusatzbauteile zur Strahlenteilung und für Referenzstrahlen, insbesondere regelmäßige Gitterstrukturen, sind vorteilhafterweise nicht erforderlich. Aufgrund dieser vereinfachten Herstellbarkeit kann die Membran zudem einfacher in das Sensorgehäuse integriert werden. Weiter hat das divergent ausgestrahlte Laserlicht den Vorteil, dass die Laserlichtquelle zusammen mit dem Bildsensor mit einem Abstand zu der Membranoberfläche derart angeordnet werden kann, um einen Betrieb des Drucksensors auch für Hochtemperaturanwendungen zu ermöglichen. Zusammenfassend bildet der Drucksensor eine besonders robuste Bauweise aus, die für den zuverlässigen Einsatz in Industrieanwendungen geeignet ist.

Weiter vorteilhaft ist der Drucksensor nicht auf bestimmte Geometrien der Membran eingeschränkt. Auch der zu erfassende Oberflächenbereich der ausgelenkten Membranoberfläche kann vorteilhafterweise beliebig ausgewählt werden und eine Erkennung von vorbestimmten Auslenkungsformen ist vorzugsweise nicht erforderlich. Vorzugsweise können auch Deformationen oder Auslenkungen für nicht kreisrunde Membranen oder mit vorbekanntem Auslenkungsverhalten erfasst werden. Weiter vorteilhaft können Auslenkungen der Membran in einem oder mehreren begrenzten Messbereichen erfasst werden.

Vorzugsweise handelt es sich bei dem Interferenzmuster um eine zweidimensionale Intensitätsverteilung über mehrere Pixel des Bildsensors, wobei reflektiertes Licht über die divergent ausgeleuchtete Membranoberfläche erfasst werden. Vorzugsweise verändert sich aufgrund der Auslenkung der Membran und vorzugsweise einer geometrischen Veränderung der Membran eine Lauflänge des Laserlichts von der Laserlichtquelle zu der Membran, sowie eine Lauflänge des reflektierten Lichts zwischen der Membran und dem Bildsensor. Das Interferenzmuster ergibt sich dabei bevorzugt aus einer Überlagerung vieler verschiedener Lichtwellen des reflektierten Lichts, die vorzugsweise auf jeden Pixel des Bildsensors treffen und sich dort überlagern. Dabei können sich die Lichtwellen des reflektierten Lichts mit unterschiedlichen Phasenlagen an den Pixeln des Bildsensors überlagern und zu einer örtlichen Vergrößerung oder Reduktion, insbesondere bis hin zur Auslöschung, einer Intensität an den Pixeln des Bildsensors führen. Dabei hat die Erfindung den Vorteil erkannt, dass die überlagerten Lichtwellen am Bildsensor charakteristische Interferenzmuster in Abhängigkeit einer Druckbeanspruchung und der Auslenkung der Membran erzeugen.

Gemäß einer bevorzugten Ausführungsform weist die Membran eine zumindest teilweise optisch raue Membranoberfläche auf, um das druckabhängige Interferenzmuster des reflektierten Lichts am Bildsensor zu erzeugen. Vorzugsweise ist das reflektierte Licht zumindest teilweise diffus gestreut und erzeugt in Abhängigkeit der Auslenkung der Membran charakteristische und reproduzierbare Interferenzmuster am Bildsensor. Vorteilhafterweise bedarf es keiner spiegelnden oder optisch glatten Membranoberfläche und keiner aufwändigen Oberflächenbehandlung oder Oberflächenbeschichtung. Vielmehr kann die Membran aus herkömmlichen Materialien für den Einsatz in der Automatisierungstechnik und/oder Prozesstechnik ausgebildet sein und es können zum Beispiel mechanische, insbesondere spanende Maschinenverfahren zur Herstellung der Membran eingesetzt werden. Mit anderen Worten kann auf die Verwendung von Mikrobearbeitungsverfahren oder Beugungsgittern verzichtet werden.

Als zumindest teilweise optisch raue Membranoberfläche wird vorzugsweise eine Oberfläche mit Unebenheiten verstanden, die Weglängenunterschiede für das reflektierte Licht hervorrufen können. Insbesondere können dabei reflektierten Lichtwellen benachbarter Oberflächenabschnitte unterschiedliche zufällige Phasenlagen zueinander aufweisen, um eine für den Auslenkungszustand der Membran charakteristische Intensitätsverteilung, insbesondere mit hellen und dunklen Bereichen am Bildsensor zu erzeugen. Bevorzugt sind die Unebenheiten zumindest teilweise zufällig verteilt, um das Laserlicht bevorzugt zumindest teilweise diffus zu reflektieren, wobei die Unebenheiten vorzugsweise aufgrund einer Membranherstellung oder Oberflächenbearbeitung eingebracht sind. Mit anderen Worten ist es nicht erforderlich, dass auf der Membran vordefinierte oder systematische Oberflächenstrukturen, insbesondere Gitterstrukturen, ausgebildet sind. Besonders bevorzugt sind die Unebenheiten der Membranoberfläche zumindest entlang einer Normalenrichtung, insbesondere vertikal und vorzugsweise teilweise transversal zur Membranoberfläche, ausgebildet. Die Membranoberfläche ist vorzugsweise nicht optisch glatter als eine halbe Wellenlänge des Laserlichts, um das Interferenzmuster hervorzurufen. Dabei ist die Laserlichtquelle und die Erfassungseinheit bevorzugt körperfest, insbesondere starr, in dem Sensorgehäuse angeordnet, wobei eine relative Auslenkung der Membran gegenüber dem Sensorgehäuse das Interferenzmuster verändert.

Vorzugsweise erfasst der Bildsensor die Referenz-Interferenzmuster in einem Einlernmodus und speichert diese ab. Insbesondere wirkt dabei der Drucksensor mit einer Einlernvorrichtung oder einer Druckregelung zusammen, mit der im Einlernmodus eine Druckbeanspruchung auf die Membran mit den vordefinierten Referenz-Druckwerten einstellbar ist. Vorzugsweise wird das Einlernen und die Erfassung der Referenz-Interferenzmuster einmalig durchgeführt, wobei ein Austausch der Membran und/oder eine Änderung der Messausrichtung mit Membran und Sensoranordnung in dem Sensorgehäuse ein neues Einlernen erfordern kann. Bevorzugt nachfolgend kann in einem Betriebsmodus mittels des Drucksensors der Mess-Druckwert und eine Druckbeaufschlagung auf die Membran erfasst werden.

Gemäß einer besonders bevorzugten Ausführungsform ist die Auswerteeinheit zur Ausführung eines Korrelationsverfahrens ausgebildet, um Fehlerkoeffizienten zwischen dem Mess-Interferenzmuster und den gespeicherten mehreren Referenz-Interferenzmustern auszuwerten und einen minimalen Fehlerkoeffizienten zu bestimmen, wobei ein dem minimalen Fehlerkoeffizienten zugeordneter Referenz-Druckwert den Mess-Druckwert angibt. Mit anderen Worten gibt der Fehlerkoeffizient ein Maß für die Ähnlichkeit zwischen dem Mess-Interferenzmuster und den einzelnen Referenz-Interferenzmustern an.

Besonders bevorzugt werden im Korrelationsverfahren Intensitätswerte der Pixel des Bildsensors subtrahiert, die Differenz quadriert und zur Bestimmung des Fehlerkoeffizienten bevorzugt über die Pixel aufsummiert. Mit anderen Worten wird eine Auswertung nach einem Verfahren der quadratischen Abweichungen angewandt.

Nach einer bevorzugten Weiterbildung weist die Speichereinheit zumindest drei Referenz-Interferenzmuster für zumindest drei Referenz-Druckwerte auf, wobei die Auswerteeinheit ein Interpolationsalgorithmus verwendet, um Fehlerkoeffizienten für die zumindest drei Referenz-Druckwerte zu interpolieren. Vorzugsweise kann dadurch ein Mess-Druckwert mit einer geringen Anzahl an Referenz-Druckwerten und eine genauere Bestimmung des Mess-Druckwerts ermöglicht werden.

Weiter kann es bevorzugt sein, dass über einen Druckbereich von 0-24bar, vorzugsweise 0-12bar, besonders bevorzugt 0-6bar im Abstand von 100mbar Referenz-Interferenzmuster aufgenommene werden.

Die Auswerteeinheit kann bevorzugt als ein Computerprozessor, insbesondere ein Mikroprozessor im Sensorgehäuse, ausgebildet sein. Zusätzlich oder alternativ kann die Auswerteeinheit mittels einer Kommunikationsschnittstelle mit einer externen Steuereinheit, insbesondere einem Computer und/oder einer speicherprogrammierbaren Steuerung (SPS) verbunden sein.

Gemäß einer weiteren bevorzugten Ausführungsform weist die Speichereinheit mehrere Referenz-Interferenzmuster für mehrere Referenz-Druckwerte und für unterschiedliche Referenz-Temperaturwerte auf, um zusätzlich zu einem Mess-Druckwert einen Mess-Temperaturwert zu bestimmen. Bevorzugt sind Referenz-Interferenzmuster für Referenz-Temperaturwerte in 10°C Schritten aufgenommen und gespeichert. Vorzugsweise kann derart eine temperaturabhängige Beeinflussung der Auslenkung der Membran bestimmt werden. Insbesondere kann dadurch der Drucksensor zusätzlich als ein Temperatursensor verwendet werden, um ein Temperatur-Messwert eines an der Membran anliegendes Fluid zu bestimmen. Vorteilhafterweise ist eine separate Temperaturmessung oder eine Temperaturkontrolle mit separatem Temperatursensor des Drucksensors nicht erforderlich.

In diesem Zusammenhang ist es weiter denkbar, dass der Drucksensor auch nurmehr als Temperatursensor verwendet werden kann.

Die Laserlichtquelle ist bevorzugt als ein VCSEL Laserelement, insbesondere ein linear polarisiertes VCSEL mit einer Emissionswellenlänge von 850nm ausgebildet, das vorzugsweise kein Linsenelement aufweist. Das VCSEL Laserelement hat dabei den Vorteil einer besonders kleinen Baugröße, das vorzugsweise neben dem Bildsensor mit geringem Aufwand in das Sensorgehäuse integrierbar ist. Weiter bevorzugt kann durch die Verwendung des VCSEL Laserelements auf die Verwendung eines Linsenelements zur Strahlaufweitung verzichtet werden. Mit anderen Worten beleuchtet das VCSEL Laserelement die Membranoberfläche vorzugsweise unmittelbar und ohne optische Zusatzelemente. Vorteilhafterweise kann derart ein besonders einfaches und robustes Laserelement ausgebildet werden. Weiter bevorzugt erzeugt das VCSEL Laserelement das Laserlicht mit einem Aufweitungswinkel von vorzugsweise 10° bis 30°, ganz besonders bevorzugt 20°. Die Erzeugung des Laserlichts mit einem Aufweitungswinkel hat den Vorteil, dass die Membranoberfläche teilweise über einen Messabschnitt oder vollständig bestrahlt oder ausgeleuchtet werden kann, wobei die Laserlichtquelle mit einem Messabstand angeordnet werden kann. Der Messabstand hat zudem den Vorteil, dass die Sensorelektronik räumlich getrennt von der Membran angeordnet werden kann, um insbesondere den Drucksensor für Hochtemperatur-Anwendungen einsetzen zu können. Insbesondere kann es für Anwendungen in der Automatisierungs- oder Prozesstechnik vorkommen, dass der Drucksensor mit einem heißen Fluid, insbesondere ein Gas, mit Temperaturen oberhalb von 200°C, insbesondere 220°C, beaufschlagt ist, wobei der Messabstand zwischen Membranoberfläche und der Sensorelektronik, insbesondere von größer 1cm, besonders bevorzugt zwischen 1 bis 2cm beträgt, um eine temperaturbedingte Beschädigung der Sensorelektronik zu verhindern.

Alternativ sind auch andere kohärente Lichtquellen denkbar. Eine Laserlichtquelle wird jedoch aufgrund einer höheren Amplitude über die erforderliche Weglänge im Sensorgehäuse bevorzugt.

Der Bildsensor ist bevorzugt als ein Kamerachip, insbesondere ein CMOS-Detektor, ausgebildet, wobei die Auswerteeinheit bevorzugt Intensitätswerte der mehreren Pixel des Bildsensors als Matrizen mit hell-dunkel Abstufungen, insbesondere 10Bit Auflösung, besonders bevorzugt 8Bit und 256 Abstufungen für eine schnellere Auswertung, erfasst und abspeichert. Dadurch kann vorteilhafterweise der Vergleich zwischen dem Mess-Interferenzmuster und den Referenz-Interferenzmustern vereinfacht werden.

Besonders bevorzugt werden 50x50Pixel des Bildsensors ausgewertet. Eine derart niedrige Pixelanzahl hat den Vorteil einer schnelleren Auswertung und Druckwertbestimmung. Weiter kann es zur schnelleren Auswertung bevorzugt sein, die Pixelanzahl auf einen eindimensionalen Ausschnitt, insbesondere 1x30Pixel zu reduzieren. Alternativ oder zusätzlich kann ein Megapixel-Kamerachip verwendet werden, wobei vorzugsweise Pixel zusammengefasst werden, um die Auswertung zu beschleunigen.

Weiter bevorzugt ist die Membran aus einem elastisch verformbaren Material, insbesondere aus Metall, besonders bevorzugt aus Edelstahl hergestellt, um den praktischen Einsatz des Drucksensors für Industrieanwendungen und eine einfachere Herstellung zu verbessern. In diesem Zusammenhang ist die Membran bevorzugt in einem spanenden Verfahren, insbesondere einem Dreh- und/oder Fräsverfahren, hergestellt. Gemäß einer Weiterbildung kann die Membran kreisförmig in einem Drehverfahren hergestellt sein, wobei die Membranoberfläche kreisrunde Oberflächenstrukturen aufweisen kann und das reflektierte Licht teilweise als ringförmige Interferenzmuster sich überlagern können. Vorteilhafterweise kann die Membran auch eine beliebig abweichende Geometrie aufweisen, die nicht auf eine Kreisform beschränkt ist.

Vorzugsweise beträgt ein Rauhigkeitswert der Membranoberfläche größer 1µm, besonders bevorzugt zwischen 40µm und 60µm, ganz besonders bevorzugt 50µm. Insbesondere handelt es sich dabei um eine maximale Rautiefe, die vorzugsweise Einkerbungen aufgrund mechanischer Bearbeitung angeben.

Besonders bevorzugt weist die Membran einen Durchmesser von 10mm bis 30mm, vorzugsweise 20mm und eine Membrandicke von 0,4mm bis 0,8mm, vorzugsweise 0,6mm, auf, die vorzugsweise für hohe Drücke bis zumindest 8bar elastisch verformbar ist.

Gemäß einer weiter bevorzugten Ausführungsform bildet der Bildsensor und die Auswerteeinheit einen Regelkreis mit der Laserlichtquelle aus, wobei die Auswerteeinheit eine Durchschnittshelligkeit des aufgenommenen Interferenzmusters des Bildsensors als konstant zu haltende Regelgröße auswertet und eine Leistungsversorgung, insbesondere ein Laserstrom, der Laserlichtquelle regelt. Vorteilhafterweise kann mittels des Regelkreises eine optische Leistung des emittierten Laserlichts der Laserlichtquelle über eine Betriebszeit konstant gehalten werden. Insbesondere kann dadurch eine Temperaturabhängigkeit des Abstrahlverhaltens der Laserlichtquelle kompensiert werden, um den Vergleich zwischen Mess-Interferenzmuster und Referenz-Interferenzmuster zu verbessern. Vorzugsweise werden die Mess- und Referenzinterferenzmuster erst abgespeichert, nachdem eine vordefinierte Regeldifferenz klein genug ist. Mit anderen Worten ist die Regelung bevorzugt immer aktiv, wobei nurmehr im Falle einer vordefiniert klein genügenden Regeldifferenz nicht nachgeregelt wird. Vorzugsweise kann auch als Stellgröße eine Spannungsversorgung der Laserlichtquelle geregelt werden, um die konstante Durchschnittshelligkeit anzupassen. Alternativ oder zusätzlich kann die Sensorelektronik eine Photodiode aufweisen, um eine Regelgröße für die Leistungsversorgung der Laserlichtquelle bereitzustellen.

Das Sensorgehäuse kann bevorzugt einen Steckeranschluss, insbesondere einen M12 Anschluss, aufweisen, der zur Verbindung mit einer übergeordneten Steuereinheit, insbesondere eine SPS und eine Spannungsversorgungseinheit dient. Insbesondere über eine IO-Link-Schnittstelle kann ein ermittelter Druckwert an die übergeordnete Steuereinheit übermittelt werden. Der Drucksensor kann vorzugweise mediumsseitig einen Prozessanschluss zur Fixierung aufweisen, insbesondere an einem Druckbehälter oder einem Druckrohr, in dem sich das Fluid befindet und dessen Druck gemessen werden soll. Vorzugsweise ist die auslenkbare Membran integraler Bestandteil des Prozessanschlusses, die den Innenraum des Drucksensors mit der Sensorelektronik vom Außenraum trennt.

Vorteilhafterweise kann durch die räumliche Trennung zwischen Membran und Sensorelektronik die Membran vorzugsweise frontbündig in dem Sensorgehäuse ausgebildet sein, um eine verbesserte Anordnung in einem Druckrohr oder Druckbehälter zu ermöglichen.

Bevorzugt ist die Sensorelektronik und die Membran in einem gemeinsamen Sensorgehäuse angeordnet, insbesondere um eine Wärmeverteilung in dem Gehäuse zu verbessern.

Alternativ oder zusätzlich kann das Sensorgehäuse zwei miteinander verbindbare Gehäuseteile aufweisen, wobei in einem Gehäuseunterteil die Membran, insbesondere als Teil des Prozessanschlusses, und in einem Gehäuseoberteil die Sensorelektronik angeordnet ist, wobei die Membran mit dem Gehäuseunterteil vorzugsweise in einem Stück hergestellt ist. Vorteilhafterweise kann dadurch die zu erfassende Membran des Drucksensors einfach ausgetauscht werden. Dies hat Vorteile hinsichtlich der Herstellung, Wartung, Montage und/oder einer Anpassung an unterschiedliche Druck-Messbereiche. Insbesondere die Integration der Membran in dem Gehäuseunterteil in einem Stück und vorzugsweise aus dem gleichen Material kann die Herstellung vereinfachen. Vorzugsweise wird ein einmaliges Einlesen der Referenz-Interferenzmuster nach einem Austausch der Membran durchgeführt. Eine Verbindung zwischen den zwei Gehäuseteilen kann bevorzugt als Schraubverbindung ausgeführt sein.

Weiterbildend ist es auch denkbar, dass das Gehäuseunterteil durch ein Druckbauteil, insbesondere ein Druckbehälter oder Druckrohr, ausgebildet ist. Dabei ist der Drucksensor vorzugsweise mechanisch starr oder fest mit dem Druckbauteil verbindbar. Dabei kann bevorzugt eine Außenwandung des Druckbauteils die druckabhängig auslenkbare Membran ausbilden, die mit dem Drucksensor erfasst wird. Vorzugsweise kann eine Wandstärke der Außenwandung angepasst werden, um eine Auslenkung der Membran für geringe Druckwerte zu ermöglichen.

Gemäß einer bevorzugten Weiterbildung weist die Auswerteeinheit eine Maschinenlerneinheit, vorzugsweise ein neuronales Netz auf, das mittels der mehreren Referenz-Interferenzmuster für mehrere Referenz-Druckwerte trainiert wird. Dabei kann nachfolgend die eingelernte Maschinenlerneinheit für die Auswertung der Mess-Interferenzmuster verwendet werden, um den Mess-Druckwert zu bestimmen.

Weiter betriff die Erfindung auch ein Messverfahren für einen Drucksensor, insbesondere ein zuvor genannter Drucksensor, wobei der Drucksensor eine Sensorelektronik mit Laserlichtquelle und einer Erfassungseinheit aufweist, mit der insbesondere eine Auslenkung einer Membran des Drucksensors erfasst wird, wobei eine Membranoberfläche mit kohärentem Laserlicht bestrahlt wird und reflektiertes Licht von der Erfassungseinheit empfangen werden. Dabei bestrahlt die Laserlichtquelle divergent, insbesondere mit einer aufgeweiteten Laserlichtstrahlung, eine vorzugsweise teilweise optisch raue Membranoberfläche, wobei das reflektierte Licht als ein Interferenzmuster mittels eines Bildsensors mit mehreren Pixeln erfasst und ausgewertet werden. Insbesondere wird das Interferenzmuster durch das überlagerte reflektierte Licht, insbesondere reflektierte Lichtwellen, ausgebildet und wird am Bildsensor insbesondere als ein Interferenz-Intensitätsmuster erfasst. Das Interferenzmuster wird nachfolgend mit den folgenden Schritten in einer bevorzugten Reihenfolge ausgewertet.

Gemäß einem bevorzugten ersten Schritt werden mehrere Referenz-Interferenzmuster für mehrere Referenzdruckwerte erfasst und abgespeichert. Vorzugsweise kann dieser erste Schritt als Einlernschritt einmalig für den Drucksensor ausgeführt werden, insbesondere für eine individuelle optisch raue Membranoberfläche.

In einem bevorzugt nachfolgenden zweiten Schritt wird ein Mess-Interferenzmuster während dem Betrieb des Drucksensors erfasst. Vorzugsweise ist der Drucksensor an einen Druckbehälter oder Druckrohr angeschlossen, um die Druckbeaufschlagung eines Fluids auf die Membran zu erfassen.

In einem bevorzugten dritten Schritt wird das Mess-Interferenzmuster mit den gespeicherten Referenz-Interferenzmustern, insbesondere mittels eines Korrelationsalgorithmus verglichen.

In einem bevorzugten vierten Schritt wird ein Mess-Druckwert bestimmt, insbesondere aus einem Vergleich mit den Referenz-Druckwerten, bei dem eine Abweichung zwischen Mess-Interferenzmuster und den Referenz-Interferenzmustern minimal ist.

Insbesondere durch die Verwendung eines Drucksensors mit Sensorelektronik und Membran, die fest in einem Sensorgehäuse verbaut sind, kann eine Ausrichtung der Sensorelektronik gegenüber der Membran festgelegt werden, um ein neues Einlernen zu verhindern. Dabei wird zum Einlernen des Drucksensors vorzugsweise eine Druckbeanspruchung auf die Membran mit einem vordefinierten Referenz-Druckwert erzeugt, insbesondere mit einer Einlernvorrichtung. Dabei werden die mehreren Referenz-Interferenzmuster für mehrere Referenz-Druckwerte in einer Mehrfachmessung erfasst und abgespeichert.

Nachfolgend wird die Erfindung anhand von Ausführungsbeispielen unter Bezugnahme auf die Zeichnungen näher erläutert.

Es zeigen schematisch:
- Fig. 1:: Seitenansicht auf einen Drucksensor mit Laserlichtquelle, Bildsensor und einer druckabhängig auslenkbaren Membran,
- Fig. 2:: perspektivische Ansicht auf die Membran gemäß der Fig. 1 in einem Gehäuseunterteil eines Sensorgehäuses,
- Fig. 3a,b,c:: Ansichten auf ein Interferenzmuster des Bildsensors gemäß der Fig. 1, die als mehrere Referenz-Interferenzmuster für verschiedene Referenz-Druckwerte abgespeichert sind,
- Fig. 4:: Darstellung einer Auswertung von Fehlerkoeffizienten zwischen einem aufgenommenen Mess-Interferenzmuster des Bildsensors gemäß der Fig. 1 und mehreren Referenz-Interferenzmustern.

Bei der nachfolgenden Beschreibung der bevorzugten Ausführungsformen bezeichnen gleiche Bezugszeichen gleiche oder vergleichbare Komponenten.

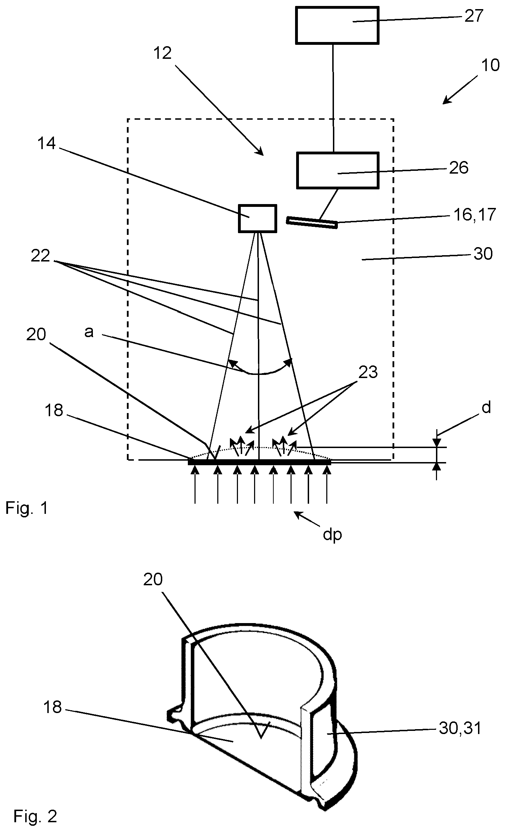

Die Fig. 1 zeigt eine schematische Ansicht auf einen Drucksensor 10 mit Sensorelektronik 12, die eine Laserlichtquelle 14 und eine als Bildsensor 17 ausgebildete Erfassungseinheit 16 aufweist, um eine Druckbeanspruchung dp auf eine Membran 18 zu erfassen. Für einen Betrieb in der Automatisierungstechnik kann der Drucksensor 10 beispielsweise an ein nicht dargestelltes Druckrohr oder Druckbehälter angeschlossen werden, wobei die Druckbeanspruchung dp eines Mess-Fluids, insbesondere ein Gas, auf die Membran 18 gemessen werden kann. Dabei erfährt die Membran 18 eine druckabhängige Auslenkung d und wird in Richtung der Sensorelektronik 12 bevorzugt elastisch ausgelenkt.

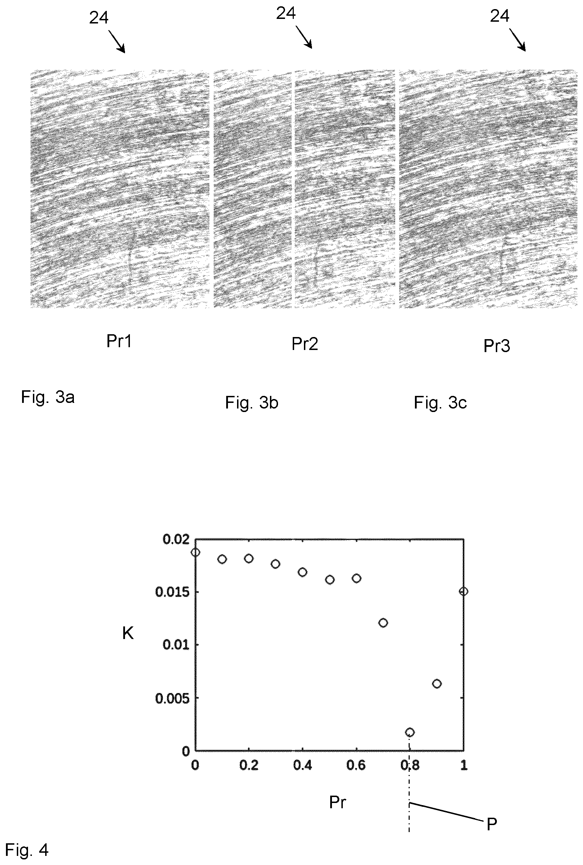

Für die Bestimmung eines Mess-Druckwerts der Druckbeanspruchung dp beleuchtet oder bestrahlt die Laserlichtquelle 14 eine Membranoberfläche 20 mit einem kohärenten Laserlicht 22 in divergenter Weise, insbesondere mit einem Aufweitungswinkel a von 20°. Die Membranoberfläche 20 ist dabei vorzugsweise teilweise optisch rau ausgebildet, wobei das reflektierte Licht 23 beispielhaft als mehrere Lichtstrahlen eingezeichnet ist, wobei insbesondere reflektierte Lichtwellen benachbarter Unebenheiten oder Oberflächenabschnitte, mit teilweise unterschiedlichen Phasenlagen am Bildsensor 17 interferieren. Der Bildsensor 17 weist mehrere Pixel auf, um das reflektierte Licht 23 als ein druckabhängiges Interferenzmuster 24 zu erfassen, das beispielhaft als eine zweidimensionale Intensitätsverteilung in den Fig. 3a bis Fig. 3c dargestellt ist. Dabei sind die Membran 18 und die Sensorelektronik 12 in einem Sensorgehäuse 30 bevorzugt körperfest zueinander angeordnet, wobei das Interferenzmuster 24 in reproduzierbarer Weise eine für die Auslenkung d der Membran 18 charakteristische Intensitätsverteilung ausgibt. Mit anderen Worten verändert sich aufgrund der Auslenkung d der Membran 18 eine Lauflänge des Laserlichts 22 von der Laserlichtquelle 14 zu der Membran 18, sowie eine Lauflänge des reflektierten Lichts 23 zwischen der Membran 18 und dem Bildsensor 17. Vorzugsweise verändert sich die Membran 18 geometrisch, insbesondere mit einer beispielhaft dargestellten gewölbten Auslenkung d in Richtung der Sensorelektronik 12, wobei die Lauflängen der exemplarisch eingezeichneten Lichtstrahlen für das Laserlicht 22 und das reflektierte Licht 23 sich verändern. Das Interferenzmuster 24 ergibt sich dabei bevorzugt aus einer Überlagerung vieler verschiedener Lichtwellen des reflektierten Lichts 23, die auf jeden Pixel des Bildsensors 17 treffen und sich dort überlagern. Dabei können sich die Lichtwellen des reflektierten Lichts 23 mit unterschiedlichen Phasenlagen an den Pixeln des Bildsensors 17 überlagern und zu einer örtlichen Vergrößerung oder Reduktion, insbesondere bis hin zur Auslöschung, einer Intensität an den Pixeln des Bildsensors 17 führen. Je nach Auslenkung d der Membran 18 und der Änderung der Lauflängen kann sich dabei eine Intensitätsverteilung am Bildsensor 17 verändern. Beispielhafte Intensitätsverteilungen über die Pixel des Bildsensors 17 können den Fig. 3a bis Fig. 3c entnommen werden.

Weiter weist der Drucksensor 10 eine Auswerteeinheit 26 mit einer Speichereinheit auf, die mehrere Referenz-Interferenzmustern für mehrere Referenz-Druckwerte Pr gemäß den Fig. 3a bis Fig. 3c abspeichert. Aus einem Vergleich der Fig. 3a bis Fig. 3c ist erkennbar, dass die Lichtwellen des reflektierten Lichts 23 je nach Referenz-Druckwert Pr unterschiedliche Intensitätsverteilungen und unterschiedliche Referenz-Interferenzmuster erzeugen können. Somit kann vorteilhafterweise ein für Druckbeanspruchung dp charakteristische Intensitätsverteilung als Interferenzmuster 24 erzeugt und für die Auswertung des Mess-Druckwerts herangezogen werden. Insbesondere durch einen Vergleich eines Mess-Interferenzmusters mit den mehreren gespeicherten Referenz-Interferenzmustern kann mittels der Auswerteeinheit 26 der auf die Membran 18 wirkende Mess-Druckwert ermittelt werden. Vorzugsweise kann dabei der Drucksensor 10 in einem Einlernprozess mit den vordefinierten Referenz-Druckwerten Pr betrieben werden, um die Referenz-Interferenzmuster aufzunehmen und abzuspeichern. Mit anderen Worten kann durch den Vergleich vorzugsweise das für das Mess-Interferenzmuster ähnlichste oder passendste Referenz-Interferenzmuster gefunden werden, um dadurch einen Rückschluss auf einen aktuell am Drucksensor 10 anliegenden Mess-Druckwert zu ermöglichen.

Weiter kann die Auswerteeinheit 26 mit einer externen Steuerungseinheit 27 zur Auswertung und/oder Auslesen von Messdaten verbunden sein.

Die teilweise optisch raue Membranoberfläche 20 weist bevorzugt zufällig verteilte hier nicht dargestellte Unebenheiten auf, die insbesondere aufgrund einer Membranherstellung oder Oberflächenbearbeitung eingebracht sind. Mit anderen Worten sind auf der Membran 18 vorzugsweise keine vordefinierten oder systematischen Oberflächenstrukturen, insbesondere Gitterstrukturen, ausgebildet. Besonders bevorzugt sind die Unebenheiten der Membranoberfläche 20 zumindest entlang einer Normalenrichtung, insbesondere vertikal und vorzugsweise teilweise transversal zur Membranoberfläche 20, ausgebildet.

Die Fig. 2 zeigt die Membran 18 im Detail, die bevorzugt als Wand eines Sensorgehäuses 30 ausgebildet ist. Dabei ist es denkbar, die Membran 18 in einem Gehäuseunterteil 31 des Sensorgehäuses 30 getrennt von einem nicht dargestellten Oberteil mit Sensorelektronik 12 anzuordnen. Vorzugsweise kann die Membran 18 zusammen mit dem Gehäuseunterteil 31 als ein Stück hergestellt werden. In diesem Zusammenhang kann die Membran 18 bevorzugt aus einem metallischen Material, insbesondere Edelstahl, ausgebildet und vorteilhafterweise in einem mechanischen Herstellungsverfahren robust für hohe Drücke und mit geringem Fertigungsaufwand hergestellt werden. Vorteilhafterweise kann durch die räumliche Trennung zwischen Membran 18 und Sensorelektronik 12 die Membran 18 vorzugsweise frontbündig in dem Sensorgehäuse 30 ausgebildet sein, um eine verbesserte Anordnung in einem Druckrohr oder Druckbehälter zu ermöglichen.

Die Fig. 3a, Fig. 3b und Fig. 3c zeigen die Interferenzmuster 24 als drei unterschiedliche Referenz-Interferenzmuster für unterschiedliche Druckbeanspruchungen dp auf die Membran 18 mit drei vordefinierten Referenz-Druckwerten Pr dargestellt. Insbesondere zeigt die Fig. 3a ein Interferenzmuster 24 mit einem ersten Referenz-Druckwert Pr1 von 0bar, die Fig. 3b ein Interferenzmuster 24 mit einem zweiten Referenz-Druckwert Pr2 von 1bar und die Fig. 3c ein Interferenzmuster 24 für einen Referenz-Druckwert Pr3 von 2bar. Dabei verändert sich die Intensitätsverteilung für die unterschiedliche ersten, zweiten und dritten Referenz-Druckwerte Pr1, Pr2, Pr3, wobei sich insbesondere hell-dunkel Werte der Pixel des Bildsensors 17 verändern.

Eine beispielhafte Auswertung für den Vergleich des Mess-Interferenzmusters mit den mehreren Referenz-Interferenzmustern kann der Fig. 4 entnommen werden, wobei der Vergleich mittels eines Korrelationsverfahrens durchgeführt wird und Fehlerkoeffizienten K für Referenz-Druckwerte Pr zwischen 0 bis 1bar bestimmt werden. Die ringförmigen Markierungen geben dabei die Fehlerkoeffizienten K des Vergleichs zwischen dem Mess-Interferenzmuster und dem Referenz-Interferenzmuster für den jeweiligen Referenz-Druckwert Pr an. Vorzugsweise kann mittels der Auswerteeinheit 26 ein minimaler Fehlerkoeffizient K bestimmt werden, wobei der hier dargestellte minimalen Fehlerkoeffizient K mit Referenz-Druckwert Pr von 0,8bar den Mess-Druckwert P angibt. Insbesondere für diesen minimalen Fehlerkoeffizient K weist das Mess-Interferenzmuster eine minimale Abweichung zu dem Referenz-Interferenzmustern auf. Vorzugsweise ist es weiter denkbar, dass ein Interpolationsalgorithmus verwendet wird, um die Fehlerkoeffizienten K für mehrere Referenz-Druckwerte Pr zu interpolieren, um dadurch eine Auflösung der Bestimmung des Druckwerts P zu verbessern. Insbesondere kann damit auch ein von den vordefinierten Referenz-Druckwerten Pr abweichender Mess-Druckwert P bestimmt werden.

### Bezugszeichenliste

- 10: Drucksensor
- 12: Sensorelektronik
- 14: Laserlichtquelle
- 16: Erfassungseinheit
- 17: Bildsensor
- 18: Membran
- 20: Membranoberfläche
- 22: Laserlicht
- 23: reflektiertes Licht
- 24: Interferenzmuster
- 26: Auswerteeinheit
- 27: Steuerungseinheit
- 30: Sensorgehäuse
- 31: Gehäuseunterteil
- a: Aufweitungswinkel
- d: Auslenkung der Membran
- dp: Druckbeanspruchung auf die Membran
- P: Mess-Druckwert
- Pr: Referenz-Druckwert
- Pr1, Pr2, Pr3: erster, zweiter und dritter Referenz-Druckwert

## Patentansprüche

1. Drucksensor mit einer Sensorelektronik (12), die eine Laserlichtquelle (14) und eine Erfassungseinheit (16) aufweist, um eine Membranoberfläche (20) einer druckabhängig auslenkbaren Membran (18) mit kohärentem Laserlicht (22) zu bestrahlen und reflektiertes Licht (23) zu empfangen,
**dadurch gekennzeichnet,**
**dass** die Sensorelektronik (12) und die Membran (18) in einem Sensorgehäuse (30) angeordnet sind, wobei die Laserlichtquelle (14) das Laserlicht (22) divergent ausstrahlt und die Erfassungseinheit (16) als ein Bildsensor (17) mit mehreren Pixeln ausgebildet ist, um reflektiertes Licht (23) als ein druckabhängiges Interferenzmuster (24) zu erfassen, wobei der Drucksensor (10) eine Auswerteeinheit (26) mit einer Speichereinheit aufweist, die durch Vergleich eines Mess-Interferenzmusters mit mehreren gespeicherten Referenz-Interferenzmustern für mehrere Referenz-Druckwerte (Pr) einen auf die Membran (18) wirkenden Mess-Druckwert (P) ermittelt.

2. Drucksensor nach dem Anspruch 1,
**dadurch gekennzeichnet,**
**dass** die Membran (18) eine zumindest teilweise optisch raue Membranoberfläche (20) aufweist, um das druckabhängige Interferenzmuster (24) des reflektierten Lichts (23) am Bildsensor (17) zu erzeugen.

3. Drucksensor nach dem Anspruch 1 oder 2,
**dadurch gekennzeichnet,**
**dass** die Auswerteeinheit (26) zur Ausführung eines Korrelationsverfahrens ausgebildet ist, um Fehlerkoeffizienten (K) zwischen dem Mess-Interferenzmuster und den gespeicherten mehreren Referenz-Interferenzmustern auszuwerten und einen minimalen Fehlerkoeffizienten (K) zu bestimmen, wobei ein dem minimalen Fehlerkoeffizienten (K) zugeordneter Referenz-Druckwert (Pr) den Mess-Druckwert (P) angibt.

4. Drucksensor nach einem der Ansprüche 1 bis 3,
**dadurch gekennzeichnet,**
**dass** die Speichereinheit zumindest drei gespeicherte Referenz-Interferenzmuster für zumindest drei Referenz-Druckwerte (Pr) aufweist, wobei die Auswerteeinheit ein Interpolationsalgorithmus verwendet, um Fehlerkoeffizienten (K) für die zumindest drei Referenz-Druckwerte (Pr) zu interpolieren.

5. Drucksensor nach einem der Ansprüche 1 bis 4,
**dadurch gekennzeichnet,**
**dass** die Speichereinheit mehrere Referenz-Interferenzmuster für mehrere Referenz-Druckwerte (Pr) und für unterschiedliche Referenz-Temperaturwerte aufweist, um zusätzlich zu einem Mess-Druckwert (P) einen Mess-Temperaturwert zu bestimmen.

6. Drucksensor nach einem der Ansprüche 1 bis 5,
**dadurch gekennzeichnet,**
**dass** die Laserlichtquelle (14) als ein VCSEL Laserelement, insbesondere ein linear polarisiertes VCSEL mit einer Emissionswellenlänge von 850nm ausgebildet ist, das vorzugsweise kein Linsenelement aufweist und das Laserlicht (22) mit einem Aufweitungswinkel (a) von vorzugsweise 20° erzeugt.

7. Drucksensor nach einem der Ansprüche 1 bis 6,
**dadurch gekennzeichnet,**
**dass** der Bildsensor (17) als ein Kamerachip, insbesondere ein CMOS-Detektor, ausgebildet ist, wobei die Auswerteeinheit (26) Intensitätswerte der mehreren Pixel des Bildsensors (17) als Matrizen mit hell-dunkel Abstufungen, insbesondere 256 Abstufungen, erfasst und abspeichert.

8. Drucksensor nach einem der Ansprüche 1 bis 7,
**dadurch gekennzeichnet,**
**dass** die Membran (18) aus einem elastisch verformbaren Material, insbesondere aus Metall, besonders bevorzugt aus Edelstahl, ausgebildet ist und in einem spanenden Verfahren, insbesondere einem Dreh- und/oder Fräsverfahren, hergestellt ist, wobei ein Rauhigkeitswert der Membranoberfläche (20) vorzugsweise größer 1µm, besonders bevorzugt zwischen 40µm und 60µm, ganz besonders bevorzugt 50µm beträgt.

9. Drucksensor nach einem der Ansprüche 1 bis 8,
**dadurch gekennzeichnet,**
**dass** der Bildsensor (17) und die Auswerteeinheit (26) einen Regelkreis mit der Laserlichtquelle (14) ausbilden, wobei die Auswerteeinheit (26) eine Durchschnittshelligkeit des aufgenommenen Interferenzmusters (24) des Bildsensors (17) als konstant zu haltende Regelgröße auswertet und eine Leistungsversorgung der Laserlichtquelle (14) regelt.

10. Messverfahren eines Drucksensors (10), insbesondere ein Drucksensor (10) nach einem der Ansprüche 1 bis 9, mit einer Sensorelektronik (12), die eine Laserlichtquelle (14) und eine Erfassungseinheit (16) aufweist, wobei eine Membranoberfläche (20) einer Membran (18) mit kohärentem Laserlicht (22) bestrahlt wird und reflektiertes Licht (23) von der Erfassungseinheit (16) empfangen werden,
**dadurch gekennzeichnet,**
**dass** die Laserlichtquelle (14) divergent die Membranoberfläche (20) bestrahlt und wobei das reflektierte Licht (23) als ein Interferenzmuster (24) mittels eines Bildsensors (17) mit mehreren Pixeln erfasst und mit den folgenden Schritten ausgewertet wird:
- Erfassen und speichern mehrerer Referenz-Interferenzmuster für mehrere Referenzdruckwerte (Pr),
- Erfassen eines Mess-Interferenzmusters während dem Betrieb des Drucksensors (10),
- Vergleich des Mess-Interferenzmusters mit den gespeicherten Referenz-Interferenzmustern,
- Bestimmen eines Mess-Druckwerts (P) bei dem eine Abweichung zwischen dem Mess-Interferenzmuster und den Referenz-Interferenzmustern minimal ist.

## Claims

1. A pressure sensor comprising sensor electronics (12) having a laser light source (14) and a detection unit (16) for irradiating a membrane surface (20) of a pressure-dependently deflectable membrane (18) with coherent laser light (22) and receiving reflected light (23),
**characterized in that**
the sensor electronics (12) and the membrane (18) are arranged in a sensor housing (30), the laser light source (14) emitting the laser light (22) divergently and the detection unit (16) being designed as an image sensor (17) comprising a plurality of pixels for detecting reflected light (23) as a pressure-dependent interference pattern (24), the pressure sensor (10) having an evaluation unit (26) comprising a storage unit which determines a measured pressure value (P) acting on the membrane (18) by comparing a measured interference pattern with a plurality of stored reference interference patterns for a plurality of reference pressure values (Pr).

2. The pressure sensor according to claim 1,
**characterized in that**
the membrane (18) has an at least partially optically rough membrane surface (20) in order to generate the pressure-dependent interference pattern (24) of the reflected light (23) at the image sensor (17).

3. The pressure sensor according to claim 1 or claim 2,
**characterized in that**
the evaluation unit (26) is designed to carry out a correlation method in order to evaluate error coefficients (K) between the measured interference pattern and the stored plurality of reference interference patterns and to determine a minimum error coefficient (K), a reference pressure value (Pr) assigned to the minimum error coefficient (K) indicating the measured pressure value (P).

4. The pressure sensor according to any of claims 1 to 3,
**characterized in that**
the storage unit has at least three reference interference patterns stored for at least three reference pressure values (Pr), the evaluation unit using an interpolation algorithm to interpolate error coefficients (K) for the at least three reference pressure values (Pr).

5. The pressure sensor according to any of claims 1 to 4,
**characterized in that**
the storage unit has a plurality of reference interference patterns for a plurality of reference pressure values (Pr) and for different reference temperature values in order to determine a measured temperature value in addition to a measured pressure value (P).

6. The pressure sensor according to any of claims 1 to 5,
**characterized in that**
the laser light source (14) is designed as a VCSEL laser element, in particular a linearly polarized VCSEL with an emission wavelength of 850 nm, which preferably does not comprise a lens element and generates the laser light (22) with an expansion angle (a) of preferably 20°.

7. The pressure sensor according to any of claims 1 to 6,
**characterized in that**
the image sensor (17) is designed as a camera chip, in particular a CMOS detector, the evaluation unit (26) detecting and storing intensity values for the plurality of pixels of the image sensor (17) as matrices with light-dark gradations, in particular 256 gradations.

8. The pressure sensor according to any of claims 1 to 7,
**characterized in that**
the membrane (18) is formed from an elastically deformable material, in particular from metal, particularly preferably from stainless steel, and is produced by machining, in particular turning and/or milling, a roughness value of the membrane surface (20) preferably being greater than 1 µm, particularly preferably being between 40 µm and 60 µm, very particularly preferably being 50 µm.

9. The pressure sensor according to any of claims 1 to 8,
**characterized in that**
the image sensor (17) and the evaluation unit (26) form a closed control loop with the laser light source (14), the evaluation unit (26) evaluating an average brightness of the recorded interference pattern (24) of the image sensor (17) as a closed-loop control variable to be kept constant and using closed-loop control to control a power supply to the laser light source (14).

10. A measuring method of a pressure sensor (10), in particular a pressure sensor (10) according to any of claims 1 to 9, comprising sensor electronics (12) which have a laser light source (14) and a detection unit (16), a membrane surface (20) of a membrane (18) being irradiated with coherent laser light (22) and reflected light (23) being received by the detection unit (16),
**characterized in that**
the laser light source (14) divergently irradiates the membrane surface (20), the reflected light (23) being detected as an interference pattern (24) by means of an image sensor (17) comprising a plurality of pixels and evaluated by means of the following steps:
- detecting and storing a plurality of reference interference patterns for a plurality of reference pressure values (Pr),
- detecting a measured interference pattern during operation of the pressure sensor (10),
- comparing the measured interference pattern with the stored reference interference patterns, and
- determining a measured pressure value (P) at which the difference between the measured interference pattern and the reference interference patterns is minimal.

## Revendications

1. Capteur de pression comportant un équipement électronique de capteur (12) qui présente une source de lumière laser (14) et une unité de détection (16) afin d'irradier une surface de membrane (20) d'une membrane (18) pouvant être déviée en fonction de la pression avec une lumière laser (22) cohérente et de recevoir la lumière réfléchie (23),
**caractérisé en ce**
**que** l'équipement électronique de capteur (12) et la membrane (18) sont disposés dans un boîtier de capteur (30), dans lequel la source de lumière laser (14) diffuse la lumière laser (22) de manière divergente et l'unité de détection (16) est réalisée sous forme de capteur d'image (17) comportant plusieurs pixels afin de détecter la lumière réfléchie (23) sous forme de modèle d'interférence (24) dépendant de la pression, dans lequel le capteur de pression (10) présente une unité d'évaluation (26) comportant une unité de mémoire qui détermine une valeur de pression de mesure (P) agissant sur la membrane (18) en comparant un modèle d'interférence de mesure avec plusieurs modèles d'interférence de référence mémorisés pour plusieurs valeurs de pression de référence (Pr).

2. Capteur de pression selon la revendication 1,
**caractérisé en ce**
**que** la membrane (18) présente une surface de membrane (20) au moins partiellement optiquement rugueuse afin de produire le modèle d'interférence (24) dépendant de la pression de la lumière réfléchie (23) sur le capteur d'image (17).

3. Capteur de pression selon la revendication 1 ou 2,
**caractérisé en ce**
**que** l'unité d'évaluation (26) est configurée pour exécuter un procédé de corrélation afin d'évaluer des coefficients d'erreur (K) entre le modèle d'interférence de mesure et les modèles d'interférence de référence mémorisés et de déterminer un coefficient d'erreur minimal (K), dans lequel une valeur de pression de référence (Pr) associée au coefficient d'erreur minimal (K) indique la valeur de pression de mesure (P).

4. Capteur de pression selon l'une des revendications 1 à 3,
**caractérisé en ce**
**que** l'unité de mémoire présente au moins trois modèles d'interférence de référence mémorisés pour au moins trois valeurs de pression de référence (Pr), dans lequel l'unité d'évaluation utilise un algorithme d'interpolation pour interpoler des coefficients d'erreur (K) pour les au moins trois valeurs de pression de référence (Pr).

5. Capteur de pression selon l'une des revendications 1 à 4,
**caractérisé en ce**
**que** l'unité de mémoire présente plusieurs modèles d'interférence de référence pour plusieurs valeurs de pression de référence (Pr) et pour différentes valeurs de température de référence afin de déterminer une valeur de température de mesure en plus d'une valeur de pression de mesure (P).

6. Capteur de pression selon l'une des revendications 1 à 5,
**caractérisé en ce**
**que** la source de lumière laser (14) est réalisée sous forme d'élément laser VCSEL, en particulier une VCSEL polarisée linéairement avec une longueur d'onde d'émission de 850 nm, qui ne présente de préférence aucun élément de lentille et qui produit la lumière laser (22) avec un angle d'élargissement (a) de préférence de 20°.

7. Capteur de pression selon l'une des revendications 1 à 6,
**caractérisé en ce**
**que** le capteur d'image (17) est réalisé sous forme de puce de caméra, en particulier de détecteur CMOS, dans lequel l'unité d'évaluation (26) détecte et mémorise des valeurs d'intensité des pixels du capteur d'image (17) sous forme de matrices avec des échelonnements clair-obscur, en particulier 256 échelonnements.

8. Capteur de pression selon l'une des revendications 1 à 7,
**caractérisé en ce**
**que** la membrane (18) est réalisée en un matériau élastiquement déformable, en particulier en métal, de préférence en acier inoxydable, et est fabriquée par un procédé d'usinage, en particulier un procédé de tournage et/ou de fraisage, dans lequel une valeur de rugosité de la surface de membrane (20) est de préférence supérieure à 1 µm, plus préférablement comprise entre 40 µm et 60 µm, de manière particulièrement préférée de 50 µm.

9. Capteur de pression selon l'une des revendications 1 à 8,
**caractérisé en ce**
**que** le capteur d'image (17) et l'unité d'évaluation (26) forment un circuit de régulation avec la source de lumière laser (14), dans lequel l'unité d'évaluation (26) évalue une luminosité moyenne du modèle d'interférence (24) enregistré du capteur d'image (17) comme grandeur de régulation à maintenir constante et régule une alimentation en puissance de la source de lumière laser (14).

10. Procédé de mesure d'un capteur de pression (10), en particulier un capteur de pression (10) selon l'une des revendications 1 à 9, comportant un équipement électronique de capteur (12) qui présente une source de lumière laser (14) et une unité de détection (16), dans lequel une surface de membrane (20) d'une membrane (18) est irradiée avec une lumière laser (22) cohérente et une lumière réfléchie (23) est reçue par l'unité de détection (16),
**caractérisé en ce**
**que** la source de lumière laser (14) irradie de manière divergente la surface de membrane (20) et dans lequel la lumière réfléchie (23) est détectée sous forme de modèle d'interférence (24) au moyen d'un capteur d'image (17) comportant plusieurs pixels et est évaluée avec les étapes suivantes :
- détection et mémorisation de plusieurs modèles d'interférence de référence pour plusieurs valeurs de pression de référence (Pr),
- détection d'un modèle d'interférence de mesure pendant le fonctionnement du capteur de pression (10),
- comparaison du modèle d'interférence de mesure avec les modèles d'interférence de référence mémorisés,
- détermination d'une valeur de pression de mesure (P) à laquelle un écart entre le modèle d'interférence de mesure et les modèles d'interférence de référence est minimal.
